(19) **Europäisches Patentamt / European Patent Office / Office européen des brevets**

(11) **EP 3 182 077 B1**

(12) **EUROPEAN PATENT SPECIFICATION**

(45) Date of publication and mention
of the grant of the patent:
**16.04.2025 Bulletin 2025/16**

(21) Application number: **15853741.5**

(22) Date of filing: **15.10.2015**

(51) International Patent Classification (IPC):
**G01J 1/28** (2006.01)  **G01J 5/60** (2006.01)
**E21D 9/14** (2006.01)

(52) Cooperative Patent Classification (CPC):
**E21F 17/00; F21S 2/00;** F21W 2131/101;
Y02B 20/40

(86) International application number:
**PCT/CN2015/091964**

(87) International publication number:
**WO 2016/066020 (06.05.2016 Gazette 2016/18)**

(54) **SAFE VISIBILITY-BASED METHOD AND SYSTEM FOR MEASURING AND ESTIMATING LIGHTING STANDARDS IN TUNNEL MIDSECTIONS**

SICHERES VISIBILITÄTSBASIERTES VERFAHREN UND SYSTEM ZUR MESSUNG UND KALKULATION VON BELEUCHTUNGSSTANDARDS IN TUNNELMITTELTEILEN

PROCÉDÉ ET SYSTÈME BASÉS SUR LA VISIBILITÉ DE SÉCURITÉ POUR MESURER ET ESTIMER UNE NORME D'ÉCLAIRAGE DANS LA SECTION MÉDIANE D'UN TUNNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2014 CN 201410576996**

(43) Date of publication of application:
**21.06.2017 Bulletin 2017/25**

(73) Proprietors:
• **Beijing University Of Technology
Beijing 100124 (CN)**
• **Guizhou Expressway Group Co., Ltd.
Guiyang, Guizhou 550025 (CN)**

(72) Inventors:
• **HU, Jiangbi
Beijing 100124 (CN)**
• **WANG, Meng
Beijing 100124 (CN)**
• **GUAN, Guiping
Beijing 100124 (CN)**
• **XIE, Mingyu
Beijing 100124 (CN)**
• **CHANG, Xiangzhen
Beijing 100124 (CN)**
• **ZHANG, Xiaoqin
Beijing 100124 (CN)**
• **GUO, Da
Beijing 100124 (CN)**
• **MA, Wenqian
Beijing 100124 (CN)**
• **ZHANG, Yuanfeng
Beijing 100124 (CN)**
• **LI, Xiaoyu
Beijing 100124 (CN)**
• **GAO, Linxi
Beijing 100124 (CN)**
• **GAO, Xiaojuan
Beijing 100124 (CN)**
• **LIU, Feng
Beijing 100124 (CN)**

(74) Representative: **Laufhütte, Dieter
Lorenz Seidler Gossel
Rechtsanwälte Patentanwälte
Partnerschaft mbB
Widenmayerstraße 23
80538 München (DE)**

(56) References cited:
**EP-A1- 3 187 850       WO-A1-2016/066019
CN-A- 101 938 878     CN-A- 102 103 015**

CN-A- 102 103 015    CN-A- 102 595 679
CN-A- 102 691 942    CN-A- 102 840 519
CN-A- 104 316 171    CN-U- 204 630 714
CN-U- 204 630 714    JP-A- 2014 022 090
US-A1- 2011 156 925

- **DIJON AND WINKIN: "Tunnel Lighting: Comparison and Tests of Symmetrical, Counter-Beam, and Pro-Beam Systems", TRANSPORTATION RESEARCH RECORDS, vol. 1316, 1991, pages 46 - 53, XP002772102**

## Description

### TECHNICAL FIELD

This invention relates to the technical field of highway tunnel illumination, especially relates to an illumination standard calculation method and system for a tunnel middle section based on safe visual recognition.

### BACKGROUND

The middle section of road tunnel is a relatively closed structure, and is not affected by natural light. When the driver is driving in a tunnel middle section, the driver's visual and psychological burden will increase, as compared to when driving in an external environment. In order to improve the visual environment of tunnel, lighting facilities should be used in the tunnel, and a tunnel middle section brightness value which can satisfy the visual information collection requirements as well as the driving safety and comfort requirements of the driver driving a motor vehicle at a certain speed in the tunnel middle section should be provided, that is to say, a safe driving brightness level should be reached by the tunnel middle section.

In recent years, new road lighting lamps are developing quickly, and people more and more deeply focus on tunnel safety. But at present, there mainly exists the following problems: At home and abroad, the illumination standard of the tunnel middle section is made according to the light source of sodium lamp, the evaluation of illumination standards are mostly performed based on the subjective experience of a driver or an expert with qualitative assessment of the brightness of the tunnel middle section. Or it is based on the driver's psychological and physiological indicators to evaluate the safety of the tunnel middle section. There is a lack of research on illumination standards under different light source characteristics in the tunnel middle section that meets the driver's visual recognition requirements in an actual operation process. Study on the characteristics of the lighting source and visual recognition of a small target object in the tunnel middle section usually adopts a static measuring method, and indicators such as the reaction time are used in order to conduct theoretic study, which limits the selection of the characteristic indicators of the light source. So it is needed to find a simple and convenient technique to accurately calculate the illumination standard corresponding to different light source characteristics for a tunnel middle section based on safe visual recognition.

CN102103015 relates to an on-site dynamic measurement method of LED road lighting. "TunnelLighting: Comparison and Tests of Symmetrical, Counter-Beam, and Pro-Beam Systems", Dijon and Winkin, Transportation research record 1316, pages 46 - 53, 1991 relates to a comparison of three tunnel lighting systems, namely symmetrical, counter-beam (CBL) and pro-beam (PBL) under the same geometrical and weather conditions. CN204630714U relates to a tunnel running lighting sets quality inspection system, mainly used in highway tunnel lighting project, urban lighting and road underpass lighting project and other artificial lighting engineering.

### Summary of the invention

An objective of the invention is to solve the above-mentioned technical defects existing in the prior art, by providing an illumination standard calculation method for a tunnel middle section which is reliable and easy to operate and meets the requirements of the driver's visual perception, and also by providing a system for implementing the illumination standard calculation method for different light source characteristics of a tunnel middle section based on safe visual recognition which is simple and reliable with high utilization rate, so as to overcome the technical defects that the existing illumination standards of the tunnel middle section has unreliable basis and complicated tests with results that do not take into account the driver's psychological and physiological factors.

In order to solve at least one of the above problems, a first aspect of the invention is to provide an illumination standard calculation method for a tunnel middle section based on safe visual recognition according to claim 1 of the present application.

A second aspect of the invention provides a system for implementing an illumination standard calculation method for a tunnel middle section based on safe visual recognition according to claim 7 of the present application.

In the method and system of the invention, by combining and screening the information related to responsive driving behavior and visual recognition status towards small target object of a driver in the tunnel middle section under different light environments established by illumination devices, comprehensive safe illumination standards for the tunnel middle section that meets the safe visual recognition requirements of the driver are provided, with consideration of the driver's visual perception requirement characteristics from the driver's angle, thereby improving the accuracy of safety evaluation of the tunnel middle section brightness, with easy and convenient operation method, so as to provide a reference basis for the research of road traffic safety.

## BRIEF DESCRIPTION OF DRAWINGS

Referring to the accompanying drawings, more objectives, functions and advantages of the invention will be clarified in the following description of the embodiments of the invention wherein:

Fig. 1 is a flow chart of the method of measuring the minimum brightness value of the tunnel middle section;
Fig. 2 is a flow chart of the method of measuring the safe visual recognition threshold of the tunnel middle section;
Fig. 3 is a schematic diagram of the dynamic test of the illumination standard calculation method for a tunnel middle section based on safe visual recognition;
Fig. 4 is a schematic diagram of the static test of the illumination standard calculation method for a tunnel middle section based on safe visual recognition.

Reference numerals:

100 tunnel middle section
101 simulation tunnel middle section
102 illumination device
103 target object A, target object B
104 test vehicle

## DETAILED DESCRIPTION OF SPECIFIC EMBODIMENTS

Embodiment 1

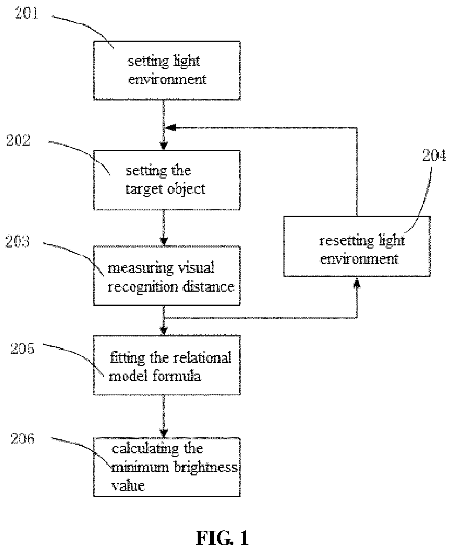

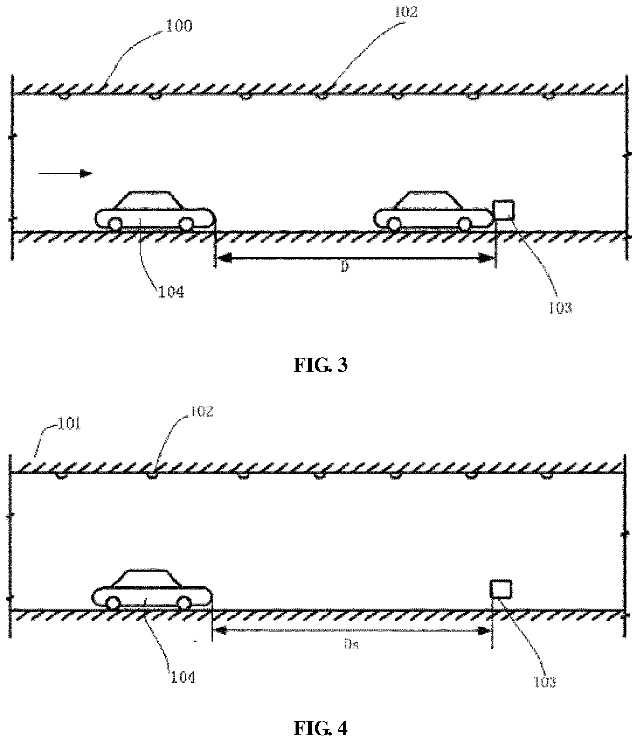

Fig. 1 shows a flow chart of the method of measuring the minimum brightness value of the tunnel middle section. Fig. 3 shows a schematic diagram of the dynamic test of the illumination standard calculation method for a tunnel middle section based on safe visual recognition. The invention provides an illumination standard calculation method for a tunnel middle section based on safe visual recognition, which calculates the minimum brightness value of the tunnel middle section that meets the safe visual recognition requirements under different light environments, so as to ensure that the driver's driving safety.
Referring to Figure 1 and Figure 3, the illumination standard calculation method for a tunnel middle section based on safe visual recognition provided by the invention comprises the following steps:

Step 201, setting the light environment of the tunnel middle section 100, wherein, the light environment includes the color temperature, the color rendering index and the average brightness L of the tunnel middle section 100, the light environment for illumination of the tunnel middle section 100 is set at a color temperature $T_0$, a color rendering index $Ra_0$ and an average brightness.

Step 202, placing a target object A 103 in the tunnel middle section 100, the distance between the starting point of the tunnel middle section and the position where the target object A 103 is placed is larger than the safe stopping sight distance $D_0$ corresponding to the maximum speed limit designed for the tunnel, so as to prepare for the driver's dynamic visual recognition experiment.

Step 203, making the driver drive the motor vehicle 104 at different speeds toward the target object A 103 direction, and measuring the visual recognition distances D required by the driver to visually discover the target object A 103 at different driving speeds;

Step 204, resetting the illumination brightness value L of the tunnel middle section 100 and repeating the Steps 202 and 203, thereby obtaining a plurality of different sets of visual recognition distances D and corresponding average brightness values L of the tunnel middle section 100.
According to partial correlation analysis, the analysis found that the visual recognition distance D has low correlation with the driving speed when making the visual recognition, while having high correlation with the average brightness value L of the tunnel middle section 100. And according to the analysis, during the driving process in the tunnel middle section, as the tunnel environment is monotonous, the perception ability of the driver towards the surrounding scenery decreases, and thus the vehicle speed can not be accurately perceived, so the visual recognition distance D is less affected by the driving speed, and there is no obvious rule. Therefore, the influence of the driving speed may be not necessary to be considered.

Step 205, according to the above obtained plurality of sets of visual recognition distances D and corresponding average brightness values L of the tunnel middle section, using a data fitting mathematical model of the S model to fit the data of the plurality of sets of D and L to obtain the relational model formula of D and L to be:

$$L = \frac{0.683}{5.575 - \ln(D)}.$$

Step 206, in order to make the illumination of the tunnel middle section 100 meet the conditions for safe driving, the safe stopping sight distance $D_0$ corresponding to the maximum speed limit of the tunnel is substituted into the model formula to obtain the minimum brightness value $L_0$ required for the tunnel middle section 100 under the particular light source characteristics. This minimum brightness value provides an illumination design basis for the tunnel middle section 100.

In order to make the illumination standard calculation method of the invention more reliable and conform to the international standard, in the present embodiment of the illumination standard calculation method for the tunnel middle section 100 based on safe visual recognition in the present invention, the target object A 103 is a gray cube with a volume of 20cm*20cm*20cm and a reflectivity of 20%. In order to eliminate the influence of the driver's memory of the target object position on the experimental results, in the tests, the target object position in the tunnel middle section 100 is arbitrary.

In order to simplify the illumination standard calculation method for the tunnel middle section 100 based on safe visual recognition of the invention, and in order to do measurement quickly, in this embodiment, a non-contact speed meter installed on the motor vehicle 104 is utilized. When the driver visually discovers the target object 103, the non-contact speed meter is triggered to record a first position; when this driver reaches the target object 103, a second position is recorded. The distance between the two positions is regarded as the visual recognition distance D. This can quickly measure the visual recognition distance, reduce the time for the implementation of the steps, and increase the efficiency of the implementation of the steps.

In this embodiment of the illumination standard calculation method for the tunnel middle section tunnel based on safe visual recognition of the invention, the brightness value of the tunnel middle section is measured by using a luminance meter or an illuminometer, and when using the illuminometer, it is necessary to calculate the relationship between the average brightness value and the average illumination value of the tunnel middle section, i.e., to calculate the average illumination conversion coefficient, so that the brightness value can be calculated after the illumination value is measured; the color temperature and the color rendering index of the tunnel middle section are measured by a luminance spectrophotometer.

In this embodiment of the illumination standard calculation method for the tunnel middle section based on safe visual recognition of the invention, the step of changing the illumination brightness of the tunnel middle section 100 is performed by changing the output power of the illumination device 102 in the tunnel middle section 100, without replacing the illumination device 102 in the tunnel middle section, thus it is convenient to implement the present embodiment.

In order to make the results more accord with the objective reality, in this embodiment of the illumination standard calculation method for the tunnel middle section based on safe visual recognition of the invention, a number of drivers are randomly selected at different ages, different eyesight levels within the normal range, and different driving experience.

Embodiment 2

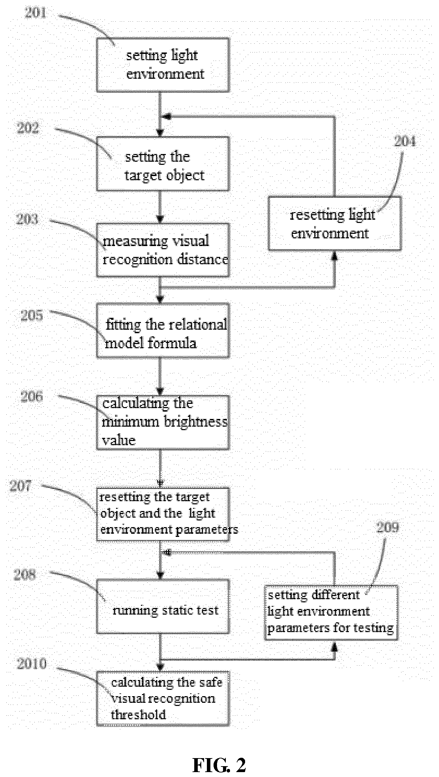

On the basis of Embodiment 1, the invention can calculate minimum brightness values of the tunnel middle section that meets the visual recognition requirements under different light environment and then obtain the safe visual recognition threshold. Figure 2 is a flow chart of the method of measuring the safe visual recognition threshold of the tunnel middle section in Embodiment 2; Figure 4 is a schematic diagram of the static test of the illumination standard calculation method for the tunnel middle section based on safe visual recognition.

Referring to Figure 2 and Figure 4, in this embodiment of the illumination standard calculation method for the tunnel middle section based on safe visual recognition of the invention, on the basis of Embodiment 1, the following steps performed by using a simulation tunnel are also included:

Step 207, placing a static test target object B 103 in the middle section of the tunnel which is a simulated tunnel 101, parking the motor vehicle at a position that is spaced apart from the static test target object B 103 by a distance Ds, and setting the color temperature to be $T_0$ and the color rendering index to be $Ra_0$ for the tunnel middle section.

In the embodiment of the present invention, if the middle section of the simulation tunnel 101 is not able to provide sufficient observation distance, and the distance Ds from the actual observation position to the static test target object B 103 may be less than the safe stopping sight distance $D_0$ corresponding to the maximum speed limit, then according to the principle of retinal imaging, the size C of the static test target object 103 meets the formula of $\dfrac{Ds}{D_0} = \dfrac{c}{20cm}$ , where $D_0$ is the safe stopping sight distance corresponding to the maximum speed limit.

Step 208, letting the driver enter the cab of the motor vehicle 104, adjusting the average brightness L of the middle section of the simulation tunnel 101 is changed from small to large, and recording the static minimum brightness value $L_f$ required by the driver to visually discover the static test target object B 103.

Step 209, resetting at least one of the color temperature and the color rendering index of the middle section of the simulation tunnel 101, repeating the Step 208 to obtain static minimum brightness values $L_f$ associated with a plurality of different sets of color temperatures and color rendering indexes, setting the static minimum brightness value $L_{f0}$ associated with a color temperature $T_0$ and a color rendering index $Ra_0$ as the benchmark **J,** and comparing the benchmark **J** with static minimum brightness values $L_f$ associated with different color temperatures and color rendering indexes to obtain the visual calibration coefficients a associated with different color temperatures and color rendering indexes.

Step 2010, calculating the minimum brightness value $L_{0d}$ of the tunnel middle section under different light environments to be an arithmetic product of a and $L_0$, which is the safe visual recognition threshold of the tunnel middle section.

Embodiment 3

This embodiment of the present invention applies the method of Embodiment 1 to a test in an actual tunnel middle section. A tunnel middle section 100 of a highway in a province is selected for measurement of its safe minimum brightness value L. The freeway tunnel total length is 555m, the maximum speed limit is 80km/h, the light environment of the tunnel middle section has a color temperature of 5700K and a color rendering index of 70, and the road surface in the tunnel is covered with bituminous concrete. 6 motor vehicle drivers are randomly selected as test subjects. The illumination device is arranged to set different average brightness values in the tunnel. The driver is asked to drive a motor vehicle 104 at a certain speed from the outside of the tunnel toward the inside of the tunnel and try to visually recognize the front target object 103 during the driving process, with a criterion that the driver is able to easily and quickly find the target object 103, and the driver's visual recognition status towards the target object 103 is recorded.

In the visual recognition process, the visual recognition information when the driver is driving on the test section and the light environment information of the tunnel middle section are collected. According to the model of the invention, the brightness value of the tunnel middle section is calculated. Under different brightness values of the tunnel middle section, drivers try to visually recognize the target object in the tunnel middle section. A total of 30 samples were collected, and the effective samples were 24, as shown in Table 1..

**Table 1 the dynamic visual recognition results in a tunnel middle section**

| number | Brightness ($cd/m^2$) | Driving speed (km/h) | visual recognition distance (m) | number | Brightness ($cd/m^2$) | Driving speed (km/h) | visual recognition distance (m) |
|---|---|---|---|---|---|---|---|
| 1 | 0.59 | 60.84 | 73.76 | 13 | 2.61 | 116.48 | 195.11 |
| 2 | 0.70 | 65.84 | 83.38 | 14 | 2.75 | 118.30 | 264.62 |
| 3 | 0.90 | 80.13 | 155.92 | 15 | 3.15 | 92.26 | 200.47 |
| 4 | 0.96 | 79.64 | 149.20 | 16 | 4.33 | 64.07 | 222.68 |
| 5 | 1.08 | 74.61 | 169.03 | 17 | 4.33 | 60.37 | 218.91 |
| 6 | 1.09 | 80.82 | 133.27 | 18 | 4.33 | 55.56 | 239.08 |
| 7 | 2.49 | 55.80 | 207.77 | 19 | 4.33 | 63.48 | 238.04 |
| 8 | 2.49 | 85.47 | 218.36 | 20 | 4.33 | 73.16 | 227.80 |
| 9 | 2.49 | 72.39 | 210.72 | 21 | 4.33 | 81.56 | 225.13 |
| 10 | 2.49 | 97.91 | 178.38 | 22 | 4.33 | 79.25 | 229.39 |

(continued)

| number | Brightness (cd/m$^2$) | Driving speed (km/h) | visual recognition distance (m) | number | Brightness (cd/m$^2$) | Driving speed (km/h) | visual recognition distance (m) |
|---|---|---|---|---|---|---|---|
| 11 | 2.49 | 102.77 | 167.44 | 23 | 4.77 | 74.39 | 218.02 |
| 12 | 2.49 | 110.49 | 163.93 | 24 | 4.77 | 90.69 | 208.36 |

After partial correlation analysis, it is found that the visual recognition distance D has low correlation with the driving speed of the motor vehicle 104, but has high correlation with the brightness L of the tunnel middle section 100. By the S model fitting, the following formula is obtained:

$$L = \frac{0.683}{5.575 - \ln(D)} \quad (1).$$

The safe stopping sight distance $D_0$ corresponding to a color temperature of 5700K and a color rendering index of 70 is substituted into the formula (1) to calculate the minimum brightness value $L_0$ of the tunnel middle section under such a light environment associated with different maximum speed limits (60km/h, 80km/h, 100km/h, 120km/h). Referring to table 2:

**Table 2 reasonable brightness values of the tunnel middle section**

| maximum speed limit (km/h) | 60 | 80 | 100 | 120 |
|---|---|---|---|---|
| safe stopping sight distance (m) | 75 | 110 | 160 | 210 |
| minimum brightness value (cd/m$^2$) | 0.54 | 0.8 | 1.4 | 3.0 |

Embodiment 4

Based on Embodiment 2, the present embodiment of the invention carries out a static test of the actual simulation tunnel. A simulation tunnel 101 is selected to simulate the tunnel middle section, and in this simulation tunnel, the illumination device 102 may be selected from a variety of lighting fixtures, making the tunnel light environment parameters such as average brightness, color temperature and color rendering index easier to adjust and measure. The road surface in the simulation tunnel is covered with a series of diffuse reflection materials similar to the material of a bituminous concrete road surface, which is modified asphalt waterproof coiled material.

The color temperature is related to the spectral energy distribution, and the spectral composition is the most important determinant of the color temperature of a light source. The human eye is more accustomed to the natural daytime light spectrum, and through the investigation of spectral composition of the daytime light, it is found that light close to the daytime light has a color temperature distributed in the range of 5000K-6000K. As for the current tunnel illumination device 102, the color temperature of sodium lamp is low, at about 3000K. By reference to the commonly used color temperature of the existing tunnel lamps provide by the related lighting fixture manufacturers, the color temperature of the illumination device 102 in the embodiment is selected to be at five color temperature levels of 3000K, 4000K, 5000K, 5700K, and 6500K for testing.

The color rendering index of light source is an important parameter to evaluate the color quality of a light source, which indicates the conformity extent of the color rendered for an object by illumination of the light source and the color rendered by illumination of the standard light source (sunlight). CIE stipulates the color rendering index of sunlight to be 100. In the current tunnel design, the color rendering index of the light source of the lighting fixture is not less than 70. So this experiment selects three color rendering index levels of 70, 80, and 90. By using the 5 color temperature levels and 3 color rendering index levels for experimental design, a total of 14 combinations are tested.

In this embodiment, 12 drivers with normal eyesight are randomly selected, the static visual recognition test is carried out, and the static visual recognition minimum brightness values under different light environments are collected, as presented in Table 3.

**Table 3 the static visual recognition minimum brightness values under different light environments**

| light environment of the tunnel middle section | static visual recognition minimum brightness value (cd/m$^2$) | | | |
|---|---|---|---|---|
| | 75m | 110m | 160m | 210m |
| 6500K, 70 | 0.58 | 0.72 | 1.22 | 1.77 |
| 4000K, 80 | 0.59 | 0.75 | 1.23 | 1.95 |
| 5000K, 90 | 0.79 | 0.98 | 1.50 | 2.29 |
| 5700K, 70 | 0.82 | 1.27 | 1.63 | 2.56 |
| 3000K, 80 | 0.88 | 1.33 | 1.66 | 3.09 |
| 6500K, 80 | 0.89 | 1.40 | 1.87 | 3.10 |
| 3000K, 90 | 0.91 | 1.40 | 1.98 | 3.48 |
| 5000K, 80 | 0.92 | 1.67 | 2.32 | 3.52 |
| 3000K, 70 | 1.30 | 1.99 | 2.54 | 3.54 |
| 5700K, 90 | 1.30 | 2.18 | 2.75 | 3.56 |
| 5000K, 70 | 1.50 | 2.18 | 2.76 | 3.72 |
| 6500K, 90 | 1.53 | 2.18 | 3.13 | 4.18 |
| 5700K, 80 | 1.67 | 2.18 | 3.58 | 4.64 |
| 4000K, 70 | 1.72 | 2.43 | 3.91 | 4.84 |

The static visual recognition minimum brightness value associated with a light environment of (5700K, 70) of the tunnel middle section is set as the benchmark to calculate the visual calibration factor a. Then the dynamic visual recognition minimum brightness value, namely $L_{0d}$, that meets the visual recognition distance requirements under different environments are calculated. Results are shown in Table 4, which are suitable for the free flow traffic condition.

**Table 4 Dynamic minimum brightness values of various lamps under different maximum speed limits**

| light environment of the tunnel middle section | dynamic visual recognition minimum brightness value (cd/m$^2$) | | | |
|---|---|---|---|---|
| | 60km/h | 80km/h | 100km/h | 120km/h |
| 6500K, 70 | 0.38 | 0.45 | 0.97 | 1.72 |
| 4000K, 80 | 0.39 | 0.47 | 0.97 | 1.90 |
| 5000K, 90 | 0.52 | 0.62 | 1.29 | 2.23 |
| 5700K, 70 | 0.54 | 0.80 | 1.40 | 3.00 |
| 3000K, 80 | 0.58 | 0.84 | 1.43 | 3.01 |
| 6500K, 80 | 0.59 | 0.88 | 1.60 | 3.01 |
| 3000K, 90 | 0.60 | 0.88 | 1.70 | 3.39 |
| 5000K, 80 | 0.61 | 1.05 | 1.99 | 3.42 |
| 3000K, 70 | 0.85 | 1.26 | 2.18 | 3.44 |
| 5700K, 90 | 0.86 | 1.37 | 2.36 | 3.46 |
| 5000K, 70 | 0.99 | 1.37 | 2.37 | 3.61 |
| 6500K, 90 | 1.01 | 1.38 | 2.69 | 4.07 |
| 5700K, 80 | 1.10 | 1.38 | 3.08 | 4.51 |
| 4000K, 70 | 1.13 | 1.53 | 3.36 | 4.70 |

According to the above results, the minimum brightness values $L_{0d}$ corresponding to a particular maximum speed limit under different light environments of the tunnel middle section 100 can be designed.

Embodiment 5

The invention also provides a system for implementing the illumination standard calculation method for a tunnel middle section based on safe visual recognition. The system includes a tunnel middle section subsystem that comprises illumination devices 102 with adjustable output power installed in the tunnel middle section 100 for setting the light environment; a test subsystem that comprises a target object 103 placed in the tunnel middle section, a test vehicle 104, a brightness measuring device, a color temperature measuring device, a color rendering index measuring device, a speed measuring device, and a distance measuring device, for dynamic testing and static testing with test data collection; and a data computing subsystem that comprises a computer system for fitting and processing the test data.

In the traditional tunnel illumination, the illumination device 102 often adopts highpressure sodium lamps with a low color temperature. In the current tunnel design, LED and other new lighting sources are used, and these new lighting sources have selectable color temperatures and color rendering indexes. According to statistics, the light source color temperatures of tunnel lighting fixtures are mostly in the range of 3000K-6500K. When there is a transition of light from warm white to cold white, there will also be a transition from yellow light sensation to white light sensation in visual perception, and thus the driver's visual recognition ability will also be affected. The fidelity degree of color is different under different color rendering conditions, wherein, a light source with higher color rendering performance has better reproducing effect of color, and thus the color seen by the human eye is closer to the natural original color, while a light source with low color rendering performance has poorer reproducing effect of color, and thus the color seen by the human eye is deviated to a greater extent. In the current tunnel design, the light source color rendering index of the lighting fixture is required to be not less than 70.

In the system for implementing the illumination standard calculation method for a tunnel middle section based on safe visual recognition of the invention, the lighting fixture 102 adopts an LED lamp with adjustable color temperature, and in order to make the measurement convenient, the color temperature measuring device and the color rendering index measuring device are the same, being a luminance spectrophotometer.

In the system for implementing the illumination standard calculation method for a tunnel middle section based on safe visual recognition of the invention, the brightness measuring device is a luminance meter, and can also be an illuminometer, wherein the brightness value is obtained by using the relationship between illumination and brightness. For example, the average brightness value and average illumination value of the road surface is measured first, and then the road surface average illumination conversion coefficient is calculated and thus can be used in the conversion relationship between illumination and brightness, so as to obtain the brightness by measuring the illumination. In order to increase the efficiency and precision of the measurement, the speed measuring device and the distance measuring device are the same, being a non-contact speed meter.

Compared with a large bus, a small passenger car has relatively narrower field of vision. Under the same environment, it is even more difficult for drivers in a small passenger car to visually recognize the target object. According to the most unfavorable principle, the system for implementing the illumination standard calculation method for a tunnel middle section based on safe visual recognition of the invention selects a small passenger car as the motor vehicle 104.

The drawings are only schematic and not to scale. Although the present invention has been described in combination with preferred embodiments, it should be understood that the protection scope of the present invention is not limited to the embodiments described herein.

Combined with the explanation and implementation of the present invention disclosed herein, other embodiments of the present invention are easy to understand for those skilled in the art. The illustrative embodiments are considered to be exemplary, and the true scope and main concept of the present invention are defined by the appended claims.

**Claims**

1. An illumination standard calculation method for a tunnel middle section based on safe visual recognition, comprising the following steps:

    (f) substituting a value of safe stopping sight distance $D_0$ measured in meter corresponding to the maximum speed limit of the tunnel into the model formula

$$L = \frac{0.683}{5.575 - \ln(D)}$$

    to obtain a value of dynamic minimum brightness value $L_0$ measured in cd/m$^2$ required for the tunnel middle section under this tunnel light environment.

    (g) the tunnel being a simulation tunnel, placing a static test target object B in the tunnel middle section, parking a motor vehicle at a position that is spaced apart from the target object B by a distance Ds, and setting the color temperature of the light environment in the tunnel middle section to be $T_0$ and the color rendering index of the light environment in the tunnel middle section to be $Ra_0$ for the tunnel middle section;

(h) letting a driver enter the cab of the motor vehicle, adjusting the average brightness L of the light environment in the tunnel middle section from small to large, and recording the static minimum brightness value $L_f$ required by the driver to visually discover the static test target object B;

(i) resetting at least one of the color temperature and the color rendering index of the tunnel middle section, repeating the step (h) to obtain static minimum brightness values $L_f$ associated with a plurality of different sets of color temperatures and color rendering indexes, setting the static minimum brightness value $L_{f0}$ associated with a color temperature $T_0$ and a color rendering index $Ra_0$ as benchmark J, and comparing the benchmark J with static minimum brightness values $L_f$ associated with different color temperatures and color rendering indexes to obtain the visual calibration coefficients a associated with different color temperatures and color rendering indexes;

(j) calculating the minimum brightness value $L_{0d}$ of the tunnel middle section under different light environments to be an arithmetic product of a and $L_0$, which is the safe visual recognition threshold of the tunnel middle section.

2. The method according to Claim 1, **characterized in that**, the size C of the static test target object B meets the formula

$$\frac{D_S}{D_0} = \frac{C}{20cm}$$

of , where $D_0$ is the safe stopping sight distance corresponding to the maximum speed limit.

3. The method according to Claim 1, **characterized in that** a luminance spectrophotometer is used in the step of measuring the color temperature and the color rendering index in the tunnel.

4. The method according to Claim 1, **characterized in that**, the step of resetting the illumination brightness of the tunnel middle section is performed by changing the illumination power of the tunnel middle section.

5. The method according to Claim 1, **characterized in that**, drivers are randomly selected to be distributed in a range of different ages, different driving experience and different normal eyesight; the motor vehicle is a small passenger car.

6. The method according to Claim 1, **characterized in that**, the step of measuring the brightness value uses a luminance meter for direct measurement, or uses an illuminometer with the help of the relationship between illumination and brightness to calculate the brightness.

7. A system for implementing the illumination standard calculation method for a tunnel middle section based on safe visual recognition according to any one of Claims 1-7, comprising:

a tunnel middle section subsystem that is configured to perform the step (g) and comprises illumination devices with adjustable output power, adjustable color temperature and adjustable color rendering index installed in the tunnel middle section;
a test subsystem that is configured to perform the steps (h) and (i) and comprises the target object B placed in the tunnel middle section, the motor vehicle, a brightness measuring device, a color temperature measuring device, a color rendering index measuring device, a speed measuring device, and a distance measuring device;
a data computing subsystem that comprises a computer system configured to perform the steps (f) and (j).

8. The system according to Claim 7, **characterized in that**, in the test subsystem, the color temperature measuring device and color rendering index measuring device is a luminance spectrophotometer, the brightness measuring device is a luminance meter or an illuminometer, the distance measuring device and speed measuring device are respectively a non-contact speed meter, and the motor vehicle is a small passenger car.

**Patentansprüche**

1. Beleuchtungsnorm-Berechnungsverfahren für einen Tunnelmittelabschnitt anhand einer sicheren visuellen Erkennung, umfassend die folgenden Schritte:

(f) Substituieren eines Werts für die sichere Haltesichtweite $D_0$, gemessen in Metern, entsprechend der zulässigen Höchstgeschwindigkeit des Tunnels in die Modellformel $L = \dfrac{0.683}{5.575 - \ln(D)}$, um einen Wert für den dynamischen Mindesthelligkeitswert $L_0$, gemessen in cd/m$^2$, zu erhalten, der für den Tunnelmittelabschnitt unter dieser Tunnellichtumgebung erforderlich ist;

(g) wobei der Tunnel ein Simulationstunnel ist, Platzieren eines statischen Testzielobjekts B in dem Tunnelmittelabschnitt, Parken eines Kraftfahrzeugs an einer Position, die von dem Zielobjekt B um einen Abstand Ds beabstandet ist, und Einstellen der Farbtemperatur der Lichtumgebung in dem Tunnelmittelabschnitt auf $T_0$ und des Farbwiedergabeindex der Lichtumgebung in dem Tunnelmittelabschnitt auf $Ra_0$ für den Tunnelmittelabschnitt:

(h) Einsteigenlassen eines Fahrers in den Fahrerraum des Kraftfahrzeugs, Einstellen der durchschnittlichen Helligkeit L der Lichtumgebung in dem Tunnelmittelabschnitt von klein bis groß und Aufzeichnen des statischen Mindesthelligkeitswerts $L_f$, der für den Fahrer erforderlich ist, um das statische Testzielobjekt B visuell zu erkennen;

(i) Zurücksetzen mindestens eines der Farbtemperatur und/oder des Farbwiedergabeindex des Tunnelmittelabschnitts, Wiederholen des Schritts (h), um die statischen Mindesthelligkeitswerte $L_f$ zu erhalten, die einer Vielzahl von verschiedenen Sätzen von Farbtemperaturen und Farbwiedergabeindizes zugeordnet sind, Festlegen des statischen Mindesthelligkeitswerts $L_{f0}$, der einer Farbtemperatur $T_0$ und einem Farbwiedergabeindex $Ra_0$ als Referenzwert **J** zugeordnet ist, und Vergleichen des Referenzwerts **J** mit den statischen Mindesthelligkeitswerten $L_f$, die verschiedenen Farbtemperaturen und Farbwiedergabeindizes zugeordnet sind, um die visuellen Kalibrierungskoeffizienten **a,** die verschiedenen Farbtemperaturen und Farbwiedergabeindizes zugeordnet sind, zu erhalten;

(j) Berechnen des Mindesthelligkeitswerts $L_{0d}$ des Tunnelmittelabschnitts unter verschiedenen Lichtumgebungen als arithmetisches Produkt von **a** und $L_0$, das die sichere visuelle Erkennungsschwelle des Tunnelmittelabschnitts darstellt.

2. Verfahren nach Anspruch 1, **dadurch gekennzeichnet, dass** die Größe C des statischen Testzielobjekts B der Formel $\dfrac{Ds}{D0} = \dfrac{C}{20\,cm}$ entspricht, wobei $D_0$ die sichere Haltesichtweite entsprechend der zulässigen Höchstgeschwindigkeit ist.

3. Verfahren nach Anspruch 1, **dadurch gekennzeichnet, dass** in dem Schritt des Messens der Farbtemperatur und des Farbwiedergabeindex in dem Tunnel ein Leuchtdichtespektralphotometer verwendet wird.

4. Verfahren nach Anspruch 1, **dadurch gekennzeichnet, dass** der Schritt des Zurücksetzens der Beleuchtungshelligkeit des Tunnelmittelabschnitts durch Ändern der Beleuchtungsleistung des Tunnelmittelabschnitts durchgeführt wird.

5. Verfahren nach Anspruch 1, **dadurch gekennzeichnet, dass** die Fahrer willkürlich so ausgewählt werden, dass sie in einem Bereich unterschiedlichen Alters, unterschiedlicher Fahrpraxis und unterschiedlicher normaler Sehkraft verteilt sind, wobei das Kraftfahrzeug ein kleiner Personenkraftwagen ist.

6. Verfahren nach Anspruch 1, **dadurch gekennzeichnet, dass** der Schritt des Messens des Helligkeitswerts ein Leuchtdichtemessgerät zur direkten Messung verwendet oder ein Lichtmessgerät mit Hilfe der Beziehung zwischen Beleuchtung und Helligkeit zum Berechnen der Helligkeit verwendet.

7. System zum Implementieren des Beleuchtungsnorm-Berechnungsverfahrens für einen Tunnelmittelabschnitt anhand einer sicheren visuellen Erkennung nach einem der Ansprüche 1-7, umfassend:

ein Tunnelmittelabschnitt-Untersystem, das so konfiguriert ist, dass es den Schritt (g) durchführt und Beleuchtungsvorrichtungen mit einstellbarer Ausgangsleistung, einstellbarer Farbtemperatur und einstellbarem Farbwiedergabeindex umfasst, die in dem Tunnelmittelabschnitt installiert sind;

ein Test-Untersystem, das so konfiguriert ist, dass es die Schritte (h) und (i) durchführt und das das Zielobjekt B, das in dem Tunnelmittelabschnitt platziert ist, das Kraftfahrzeug, eine Helligkeits-Messvorrichtung, eine Farbtemperatur-Messvorrichtung, eine Farbwiedergabeindex-Messvorrichtung, eine Geschwindigkeits-Messvorrichtung und eine Abstands-Messvorrichtung umfasst;

ein Datenverarbeitungs-Untersystem, das ein Computersystem umfasst, das so konfiguriert ist, dass es die Schritte (f) und (j) durchführt.

8.  System nach Anspruch 7,
    **dadurch gekennzeichnet, dass**
    in dem Test-Untersystem die Farbtemperatur-Messvorrichtung und die Farbwiedergabeindex-Messvorrichtung ein Leuchtdichtespektralphotometer ist, die Helligkeits-Messvorrichtung ein Leuchtdichtemessgerät oder ein Lichtmessgerät ist, die Abstands-Messvorrichtung und die Geschwindigkeits-Messvorrichtung jeweils ein kontaktloser Geschwindigkeitsmesser sind und das Kraftfahrzeug ein kleiner Personenkraftwagen ist.

**Revendications**

1.  Procédé de calcul de norme d'éclairage pour une section centrale de tunnel basé sur une reconnaissance visuelle sûre, comprenant les étapes suivantes :

    (f) de remplacement d'une valeur de distance de visibilité d'arrêt de sécurité $D_0$ mesurée en mètres correspondant à la limite de vitesse maximale du tunnel dans la formule de modèle $$L = \frac{0.683}{5.575 - \ln(D)}$$ pour obtenir une valeur de luminosité minimale dynamique $L_0$ mesurée en $cd/m^2$ requise pour la section centrale du tunnel sous cet environnement lumineux de tunnel,
    (g) le tunnel étant un tunnel de simulation, de placement d'un objet cible de test statique B dans la section centrale de tunnel, de stationnement du véhicule à moteur sur une position qui est espacée de l'objet cible B d'une distance Ds, et de réglage de la température de couleur de l'environnement lumineux dans la section centrale de tunnel sur $T_0$ et de l'indice de rendu des couleurs de l'environnement lumineux dans la section centrale de tunnel sur $Ra_0$ pour la section centrale de tunnel ;
    (h) d'autorisation d'un conducteur à entrer dans la cabine du véhicule à moteur, d'ajustement de la luminosité moyenne L de l'environnement lumineux dans la section centrale de tunnel de petite à grande, et d'enregistrement de la valeur de luminosité minimale statique $L_f$ requise par le conducteur pour découvrir visuellement l'objet cible de test statique B ;
    (i) de réinitialisation d'au moins un de la température de couleur et de l'indice de rendu des couleurs de la section centrale de tunnel, de répétition de l'étape (h) pour obtenir des valeurs de luminosité minimales statiques $L_f$ associées à une pluralité d'ensembles différents de températures de couleur et d'indices de rendu des couleurs, de réglage de la valeur de luminosité minimale statique $L_{f0}$ associée à une température de couleur $T_0$ et à un indice de rendu des couleurs $Ra_0$ comme référence **J**, et de comparaison de la référence J à des valeurs de luminosité minimales statiques $L_f$ associées à des températures de couleur et à des indices de rendu des couleurs différents pour obtenir les coefficients d'étalonnage visuel a associés à des températures de couleur et des indices de rendu des couleurs différents ;
    (j) de calcul de la valeur de luminosité minimale $L_{0d}$ de la section centrale de tunnel sous différents environnements lumineux pour être un produit arithmétique de **a** et $L_0$, qui est le seuil de reconnaissance visuelle sûr de la section centrale de tunnel.

2.  Procédé selon la revendication 1, **caractérisé en ce que** la taille C de l'objet cible de test statique B répond à la formule de $\frac{Ds}{D0} = \frac{C}{20\ cm}$ où $D_0$ est la distance de visibilité d'arrêt de sécurité correspondant à la limite de vitesse maximale.

3.  Procédé selon la revendication 1, **caractérisé en ce qu'**un spectrophotomètre de luminance est utilisé lors de l'étape de mesure de la température de couleur et de l'indice de rendu des couleurs dans le tunnel.

4.  Procédé selon la revendication 1, **caractérisé en ce que** l'étape de réinitialisation de la luminosité d'éclairage de la section centrale de tunnel est réalisée en modifiant la puissance d'éclairage de la section centrale de tunnel.

5.  Procédé selon la revendication 1, **caractérisé en ce que** des conducteurs sont choisis de manière aléatoire pour être répartis dans une plage d'âges différents, d'expérience de conduite différente et de vue normale différente ; le véhicule à moteur est une petite voiture de tourisme.

**6.** Procédé selon la revendication 1, **caractérisé en ce que** l'étape de mesure de la valeur de luminosité utilise un luminancemètre pour la mesure directe, ou utilise un illuminomètre à l'aide de la relation entre l'éclairage et la luminosité pour calculer la luminosité.

**7.** Système de mise en œuvre du procédé de calcul standard d'éclairage pour une section centrale de tunnel basé sur une reconnaissance visuelle sûre selon l'une quelconque des revendications 1 - 6, comprenant :

un sous-système de section centrale de tunnel qui est configuré pour réaliser l'étape (g) et qui comprend des dispositifs d'éclairage avec une puissance de sortie ajustable, une température de couleur ajustable et un indice de rendu des couleurs ajustable installés dans la section centrale de tunnel ;
un sous-système de test qui est configuré pour réaliser les étapes (h) et (i) et qui comprend l'objet cible B placé dans la section centrale de tunnel, le véhicule à moteur, un dispositif de mesure de luminosité, un dispositif de mesure de température de couleur, un dispositif de mesure d'indice de rendu des couleurs, un dispositif de mesure de la vitesse et un dispositif de mesure de la distance ;
un sous-système de calcul de données qui comprend un système informatique configuré pour réaliser les étapes (f) et (j).

**8.** Système selon la revendication 7,
**caractérisé en ce que**
dans le sous-système de test, le dispositif de mesure de température de couleur et le dispositif de mesure d'indice de rendu des couleurs sont un spectrophotomètre de luminance, le dispositif de mesure de luminosité est un luminancemètre ou un illuminomètre, le dispositif de mesure de distance et le dispositif de mesure de vitesse sont respectivement un compteur de vitesse sans contact, et le véhicule à moteur est une petite voiture de tourisme.

**FIG. 1**

201 — setting light environment

202 — setting the target object

204 — resetting light environment

203 — measuring visual recognition distance

205 — fitting the relational model formula

206 — calculating the minimum brightness value

207 — resetting the target object and the light environment parameters

209 — setting different light environment parameters for testing

208 — running static test

2010 — calculating the safe visual recognition threshold

**FIG. 2**

**FIG. 3**

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102103015

- CN 204630714 U

**Non-patent literature cited in the description**

- **DIJON** ; **WINKIN**. TunnelLighting: Comparison and Tests of Symmetrical, Counter-Beam, and Pro-Beam Systems. *Transportation research record*, 1991, vol. 1316, 46-53